# EUROPÄISCHE PATENTANMELDUNG

(11) **EP 1 285 894 A1**
(43) Veröffentlichungstag der Anmeldung: **26.02.2003**
(21) Anmeldenummer: 02018302.6
(22) Anmeldetag: 14.08.2002
(51) Int. Cl.: C03C 17/34, C03C 17/36, F24C 15/04

(54) **Verglasung für Heiz- und Kühlgerätschaften**

(30) Priorität: 23.08.2001 DE 10141453
(71) Anmelder: Schott Glas, 55122 Mainz (DE); CARL-ZEISS-STIFTUNG trading as SCHOTT GLAS, 55122 Mainz (DE)
(72) Erfinder: Leutner, Kurt, 55129 Mainz (DE); Gros, Oliver, 55494 Rheinböllen (DE); Rupp, Geerd, 55130 Mainz (DE)
(74) Vertreter: Fuchs Mehler Weiss & Fritzsche

(57) **Zusammenfassung**

Die Erfindung betrifft insbesondere eine beschichtete Verglasung für Heiz- und Kühlgerätschaften, die als Sichtscheibe für diese Gerätschaften dient.

Die Beschichtungen dieser Sichtscheiben oder Verglasungen sollen deren thermischen und mechanischen Eigenschaften verbessern. Um dabei hinsichtlich der optischen Eigenschaften keine Einbußen zu erleiden, sieht die Erfindung vor, daß auf der dem Inneren der Gerätschaft zugewandten Seite der Sichtscheibe (1) oder Verglasung eine weiche Schicht (2) und auf der dem Benutzer zugewandten äußeren Seite eine harte Schicht (3) aufgebracht ist.

## Beschreibung

Die Erfindung bezieht sich auf eine beschichtete Verglasung für Heiz- und Kühlgerätschaften.

Backöfen und Mikrowellen-Geräte besitzen typischerweise ein Sichtfenster, das einen Blick in das Geräteinnere ermöglicht, um den Garzustand des darin befindlichen Gutes beurteilen zu können. Die Sichtfenster bestehen typischerweise aus einem Mehrscheiben-Modul mit Innen- und Frontscheibe, wobei im Fall von Backöfen meist noch eine Mittelscheibe vorgesehen ist. Auch Kühltruhen für den kommerziellen Bereich besitzen im Deckelbereich eine Sichtscheibe, ebenso wie kommerzielle Kühl- und Gefrierschränke verglaste Türen besitzen. Auch sog. Heim-Bottle-Cooler besitzen eine transparente Verglasung.

Derartige Sichtscheiben bzw. Tür- oder Deckelverglasungen, im folgenden generell als Verglasungen bezeichnet, weisen gemäß dem Stand der Technik Beschichtungen auf, um insbesondere die thermischen Eigenschaften zu verbessern.

So werden die Verglasungen typischerweise mit sog. harten Schichten, beispielsweise mit einer sprühpyrolitisch aufgebrachten SnO₂-Schicht, versehen. Derartige harte Schichten sind von Hause aus
- sehr kratzfest
- hoch temperaturfest
und erlauben somit einen Einsatz in extremen Umgebungen.

Es sind auch Verglasungen bekannt, bei denen eine weiche Schicht, typischerweise durch Sputtern oder Tauchen aufgebracht ist, die bekanntlich nachstehende Vorteile haben:
- hohe Wärmedämmung (ca. 15 Ohm/Flächeneinheit)
- höhere Licht-Transmission, bis zu 90 % gegenüber z.B. 78 % bei Hart-Schichten,
- geringere Irisation
- bessere Farbwiedergabe, d.h. bessere Farbneutralität,
wobei sie allerdings weniger kratzfest und temperaturfest ist.

Es ist bekannt, sowohl die Hartschicht als auch die weiche Schicht nur auf einer Seite der Verglasung aufzubringen. Eine derartige Ausbildung hat mit Nachteil eine geringere Wärmereflexion gegenüber einer zweiseitigen Beschichtung (ca. 25 Ohm/Flächeneinheit).

Typischerweise werden daher gemäß dem Stand der Technik die Verglasungen beidseitig mit einer harten oder weichen Schicht versehen. Dies führt auf der einen Seite zwar zu einer verbesserten Wärmereflexion, bedingt jedoch auf der anderen Seite verschlechterte Eigenschaften. So zeigen beidseitig mit Hartschichten versehene Verglasungen Irisationseffekte und haben häufig eine hohe Trübung bzw. generell eine geringe Transmission von ca. 78 %. Ferner können Zangenabdrücke bei Vertikalproduktion der Verglasungen entstehen.

Beidseitig mit weichen Schichten versehene Verglasungen haben zwar eine gute Optik und ein sehr gutes Reflexionsvermögen, der Nächteil ist, daß die weiche Schicht durch den ständigen Gebrauch der Verglasung abgetragen werden kann.

Der Erfindung liegt die Aufgabe zugrunde, die eingangs bezeichnete beschichtete Verglasung für Heiz- und Kühlgerätschaften hinsichtlich der Beschichtung durch eine gute Wärmereflexion so auszubilden, daß auf der einen Seite die Energiebilanz dieser Gerätschaften verbessert wird, und auf der anderen Seite die optischen Eigenschaften nicht darunter leiden, sowie alle weiteren Gebrauchseigenschaften/-anforderungen erfüllt werden.

Die Lösung dieser Aufgabe gelingt gemäß der Erfindung dadurch, daß auf der dem Benutzer nicht zugänglichen Seite der Verglasung eine weiche Schicht und auf der dem Benutzer zugewandten äußeren Seite eine harte Schicht aufgebracht ist.

Durch die erfindungsgemäße Kombination der auf der Benutzerseite der Verglasung angebrachten harten Schicht und auf der dem Benutzer nicht zugänglichen, d.h. dem Geräteinneren zugewandten weichen Schicht gelingt es, bei Vermeidung der Nachteile die Vorteile von harten und weichen Schichten miteinander zu kombinieren, d.h. die erfindungsgemäß beschichtete Verglasung weist folgende Eigenschaften auf:
- Sehr hohe Wärmereflexion
- Hohe Transmission
- Geringe Trübung
- Geringe Irisation
- Guter Farbwiedergabeindex.

Die gute Farbwiedergabe ist insbesondere bei kommerziellen Kühlgeräteschaften von Bedeutung, um die kennzeichnenden Farben von Markenprodukten unverfälscht wiederzugeben.

Gemäß einer Ausgestaltung der Erfindung ist die weiche Schicht vorzugsweise durch eine weiche Metall- oder Metalloxidschicht gebildet, wobei die Schicht vorzugsweise eine ITO-Schicht ist.

Eine derartige Beschichtung verleiht der Sichtscheibe bzw. der Verglasung eine besonders gute Wärmedämmung sowie gute optische Eigenschaften.

Eine wirksame Aufbringung der weichen Schicht ist gewährleistet, wenn sie durch Aufsputtern oder nach einem PVD-Verfahren aufgebracht ist.

Gemäß einer weiteren Ausgestaltung der Erfindung ist eine gute Kratzfestigkeit und Temperaturbeständigkeit der Sichtscheiben bzw. der Verglasung gegeben, wenn die äußere, dem Benutzer zugewandte harte Schicht durch eine SnO₂-Schicht gebildet ist, die vorzugsweise aufgesprüht ist, aber auch durch einen CVD-Prozeß aufgebracht werden kann.

Anhand eines in der Zeichnung dargestellten Ausführungsbeispieles einer erfindungsgemäß beschichteten Scheibe für ein Sichtfenster wird die Erfindung näher beschrieben.

Es zeigen:
- Fig. 1: in einer perspektivischen Ausschnitt-Darstellung eine beidseitig beschichtete Glasscheibe mit Blick auf die Scheiben-Stirnseite,
- Fig. 2: in einer perspektivischen Draufsicht-Darstellung die Glasscheibe nach Fig. 1, und
- Fig. 3: einen Schnitt durch den Aufbau einer Mehrfach-Verglasung, z.B. für die Frontscheibe eines Bo-Schrankes.

Auf einer Glasscheibe 1 für ein Sichtfenster oder eine Verglasung von Heizund Kühlgerätschaften ist auf der dem Benutzer nicht zugänglichen Seite eine weiche Schicht 2 aufgebracht. Diese Schicht ist vorzugsweise eine weiche Metallschicht oder Metalloxidschicht, die durch Sputtern oder einem PVD-Verfahren auf der Glasscheibe 1 aufgebracht ist. Als Materialien für diese weiche Schicht kommen insbesondere in Frage: ITO (InO: Sn); ZnO: Al; Si + Schutzschicht; Al + Schutzschicht; Au.

Auf der dem Benutzer zugewandten Seite ist eine harte Schicht 3, beispielsweise aus dotierten SnO₂ oder aus Materialien mit vergleichbaren Eigenschaften, durch Sprühen aufgebracht.

Die dem Inneren der Gerätschaft zugewandte weiche Schicht 2 bedingt durch eine Erhöhung der Reflexionswirkung eine hohe Wärmedämmung und verleiht der Sichtscheibe 2 bzw. der Verglasung bessere optische Eigenschaften, d.h. hohe Transmission, geringe Trübung, geringe Irisation und gute Farbwiedergabe. Die auf der dem Benutzer zugewandten, dem ständigen "Gebrauch" ausgesetzten Seite aufgebrachte harte Schicht 3 gewährleistet eine hohe Kratzfestigkeit und Temperaturfestigkeit.

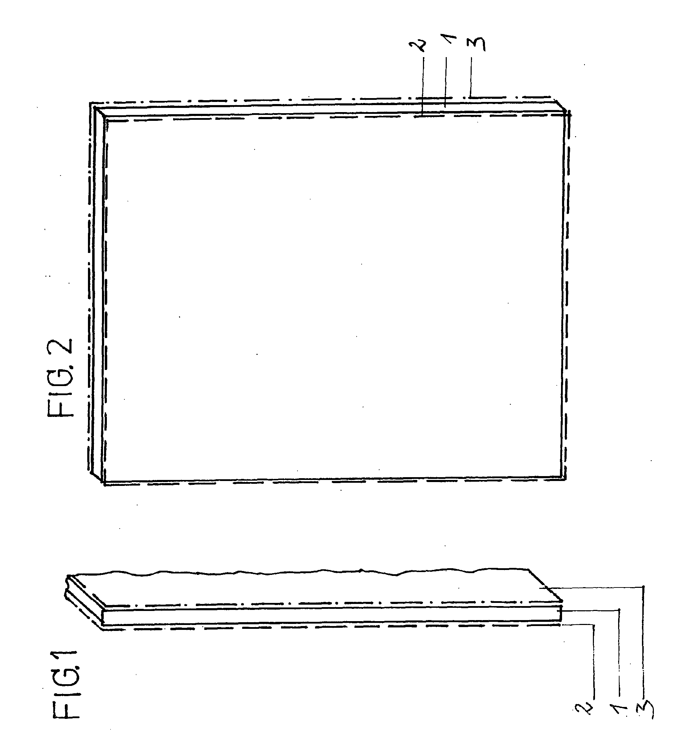

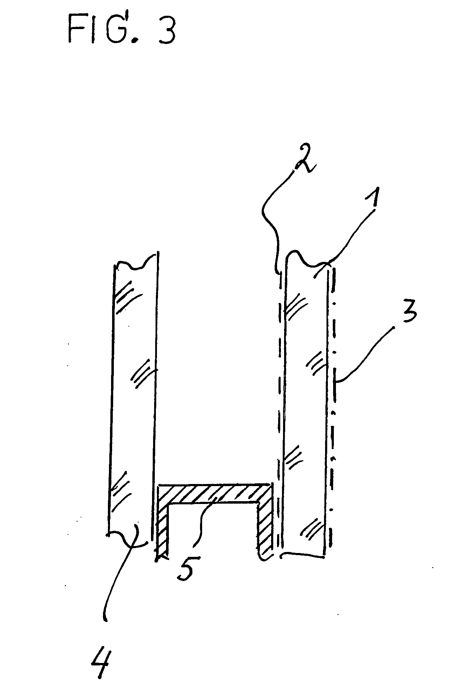

Die Fig. 3 zeigt einen Schnitt durch den Aufbau einer Mehrfach-Verglasung einer Gefrierschrank-Tür. Die dem Schrankinneren zugewandte Glasscheibe 1 trägt die anhand der Figuren 1 und 2 erläuterten Schichten, wogegen die Frontscheibe 4 unbeschichtet ist. Beide Glasscheiben 1 und 4 sind durch einen Abstandshalter 5 im Sinne einer Isolierscheibe auf einem vorgegebenen Abstand gehalten.

## Patentansprüche

1. Beschichtete Verglasung für Heiz- und Kühlgerätschaften, **dadurch gekennzeichnet, daß** auf der dem Benutzer nicht zugänglichen Seite der Sichtscheibe (1) oder Verglasung eine weiche Schicht (2) und auf der dem Benutzer zugewandten äußeren Seite eine harte Schicht (3) aufgebracht ist.

2. Verglasung nach Anspruch 1, **dadurch gekennzeichnet, daß** die weiche Schicht (2) durch eine weiche Metall- oder Metalloxidschicht gebildet ist.

3. Verglasung nach Anspruch 2, **dadurch gekennzeichnet, daß** das Material der Metall- oder Metalloxidschicht aus einem Metall der Gruppe Ag, Al, Au etc. gebildet ist.

4. Verglasung nach einem der Ansprüche 1 bis 3, **dadurch gekennzeichnet, daß** die weiche Schicht (2) aufgesputtert oder durch einen PVD-Prozeß aufgebracht ist.

5. Verglasung nach einem der Ansprüche 1 bis 4, **dadurch gekennzeichnet, daß** die harte Schicht (3) durch eine dotierte SnO₂-Schicht gebildet ist.

6. Verglasung nach einem der Ansprüche 1 bis 5, **dadurch gekennzeichnet, daß** die harte Schicht (3) aufgesprüht oder durch einen CVD-Prozeß aufgebracht ist.
